# EUROPEAN PATENT APPLICATION

(11) **EP 3 109 593 A2**
(43) Date of publication of application: **28.12.2016**
(21) Application number: 16159600.2
(22) Date of filing: 10.03.2016
(51) Int. Cl.: G01C 21/34

(54) **E-CAR TRIP PLANNER**

(30) Priority: 03.06.2015 US 201514729057
(71) Applicant: Puana, Jr., Reginald K, Arlington, Virginia 22206 (US)
(72) Inventor: Puana, Jr., Reginald K, Arlington, Virginia 22206 (US)
(74) Representative: Romano, Giuseppe

(57) **Abstract**

The disclosed herein is a computer-implemented route planning method which comprises of determining source and destination nodes in a graph data structure based on a route planning query, wherein the graph data structure represents a road network, identifying a plurality of locations on the road network for refilling or recharging of a vehicle, executing an initial graph search on the graph data structure using graph costs based on real-time traffic data, wherein the initial graph search starts at the source node and settles nodes until it stops, computing one or more routes to the destination node from one or more of said settled nodes using pre-computed data based on traffic prediction data, thereby to determine a route from the source node to the destination node via one of said settled nodes. Furthermore, the method comprises of estimating the refilling or recharging time of a vehicle while planning a route.

## Description

### BACKGROUND OF THE INVENTION

### (1)FIELD OF THE INVENTION

The present invention relates to a route planning method, particularly to a method and apparatus for planning the route of an electric vehicle.

### (2)BACKGROUND

In recent years, developments of navigation systems for automobiles, which are generally called "car navigation systems," have become increasingly popular. As a matter of fact, such navigation systems are now finding widespread commercial utility. A navigation system of this type is provided with means for detecting the present position of an automobile, and means for storing road map information in a CD-ROM or the like. When the destination of the automobile (which may hereinafter be also called the "vehicle") is set by the driver, the navigation system selects the best route from the present position to the destination, and then guides the driver along the best route.

Computerized mapping systems have been developed to search for, identify, and discover information about geographic locations. One form of such computerized mapping systems includes travel-planning Internet websites. With an excess of 50 million unique monthly users, such map sites are a very popular offering. Examples of such sites include AOL's MapQuest, Yahoo's Telcontar-based maps, and Microsoft's MapPoint.net suite. Such sites all work along the lines of a common model, as will now be described. When a Web user asks for a new map view (e.g., by entering a postal address, or by clicking a navigation link next to a current map view), the user's Web browser sends a request indicating the boundaries of the new map view to a Web server. The Web server, in turn, extracts the corresponding vector-based map data from a database, and draws a bitmap image of the map. The server then converts the bitmap to an image format that is supported by the user's Web browser and returns the image, sometimes embedded in HTML, to the user's Web browser so that it can be displayed. Other map Web sites, such as Britain's MultiMaps or Australia's Wherels, utilize a raster-based map database instead. In these cases, it is not necessary to extract vectors and draw a map image. Rather, these functions are replaced by simply extracting the appropriate part of a larger, pre-rendered image.

For the detection of the present position of the vehicle, (Global Positioning System) navigation or an autonomous navigation is generally used. With the GPS navigation, for example, a navigation system receives radio waves (GPS information) that are transmitted from plural (three or more) satellites and, based on this GPS information, detects the present position of the automobile. In combination with the above-described navigation, map matching, which is a method of correcting the thus-detected present position of the vehicle such that the detected present position can be co-related to a point along a road on a map, is also practiced. This makes it possible to detect the present position of the vehicle more accurately.

Such a navigation system is designed to display the present position of a vehicle, which has been detected as described above, together with the best route selected according to a destination on a screen. If a right-hand or left-hand turn is needed at an intersection or the like, the system guides accordingly by a voice before the vehicle enters the intersection. In addition, navigation systems that have been developed include those capable of estimating a time required to reach, from the present position of a vehicle, a destination along the best route, and displaying the same.

Simultaneous to the developments of such navigation systems, electric automobiles, which do not emit exhaust gas, are now receiving attention again from the standpoint of protection of the global environment. With a view to enhance the utility of electric automobiles, a variety of techniques are now under development. There are, however, still various problems with electric automobiles at this stage in terms of practical application.

Furthermore, computer-implemented route planning methods have also been developed. These generate a route from a start location to a destination location. Also known route planning methods have a pre-computation phase (i.e.: a computation phase prior to query time) in which map data is processed to form a graph data structure representing possible routes between locations. Costs may be assigned to arcs of the graph to apply weights based on the travel time between locations. These may take into account the distance between particular locations, the type of road, traffic conditions, and other factors that may affect travel time. Costs can alternatively or additionally be assigned to other parts of the graph, e.g.: to nodes or sub-paths.

### BRIEF SUMMARY OF THE INVENTION

The invention primarily is a computer-implemented route planning method that determines the source and destination nodes in a graph data structure based on a route planning query, wherein the graph data structure represents a road network, identifies a plurality of locations on the road network for refilling or recharging of a vehicle, executes an initial graph search on the graph data structure using graph costs based on real-time traffic data, wherein the initial graph search starts at the source node and settles nodes until it stops, computes one or more routes to the destination node from one or more of said settled nodes using pre-computed data based on traffic prediction data, thereby to determine a route from the source node to the destination node via one of said settled nodes.

One embodiment of the present invention can be a system that is comprised of one or more communication modules for communication with one or more client devices, a pre-computation module that is configured to generate a graph data structure based on map data, wherein the graph data structure represents a road network, and a query processing module that is configured to determine the source and destination nodes in the graph data structure based on a route planning query. The query-processing module is comprised of:
a first graph search module that is configured to execute an initial graph search on the graph data structure using graph costs based on real-time traffic data. The initial graph search starts at the source node and settles nodes until it stops. A second graph search module is configured to compute one or more routes to the destination node from one or more of said settled nodes using pre-computed data based on traffic prediction data, thereby to determine a route from the source node to the destination node via one of said settled nodes.

In yet another preferred embodiment, the invention is a machine-readable medium that is encoded with instructions. When executed by a processor, the instructions cause the processor to carry out a process for generating human-centric driving directions. The process generates a route in response to a user request for travel directions. The request specifies at least one target destination, and distinctive waypoints along the route. The waypoints are physical structures along the route, including road names and road topology. Each waypoint is associated with a distinctiveness score, wherein the distinctiveness score of each waypoint is based at least in part on a visual prominence of the respective waypoint, and based at least in part on an advertising fee per use for incorporating the respective waypoint in travel directions and incorporating one or more of the waypoints into travel directions responsive to the associated distinctiveness score.

Furthermore, the computer-implemented route planning method has a blending phase between the real-time traffic data and the traffic prediction data. It also includes an estimation of the refilling or recharging time of a vehicle while planning a route.

The summary is provided to introduce a selection of concepts, in a simplified form, that are further described below in the detailed description. This summary is not intended to identify key features or essential features of the subject matter, nor is it intended to be used as an aid in determining the scope of the subject matter. In this respect, before explaining at least one embodiment of the invention in detail, it is to be understood that the invention is not limited in its application to the details of construction and to the arrangements of the components set forth in the following description or illustrated in the drawings. The invention is capable of other embodiments, and of being practiced and carried out in various ways. Also, it is to be understood that the phraseology and terminology employed herein are for the purpose of description, and should not be regarded as limiting. These, together with other objectives of the invention and the various features of novelty that characterize the invention, are pointed out with particularity in the disclosure. For a better understanding of the invention, its operating advantages, and the specific objectives attained by its uses, reference should be had to the accompanying drawings and descriptive matter, in which there are illustrated preferred embodiments of the invention.

### BRIEF DESCRIPTION OF THE DRAWINGS

The drawings constitute a part of this specification and include exemplary embodiments to the invention, which may be embodied in various forms. It is to be understood that in some instances various aspects of the invention may be shown exaggerated or enlarged to facilitate an understanding of the invention.

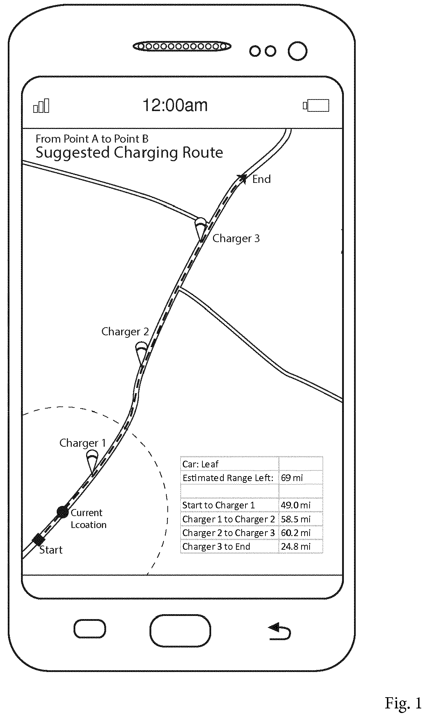

Figure.1 illustrates the various components of the invention.

### DETAILED DESCRIPTIONS OF THE INVENTION

The following is a detailed description of example embodiments of the invention depicted in the accompanying drawings. The example embodiments are in such detail as to clearly communicate the invention. However, the amount of detail offered is not intended to limit the anticipated variations of embodiments. On the contrary, the intention is to cover all modifications, equivalents, and alternatives falling within the spirit and scope of the present invention. The detailed descriptions below are designed to make such embodiments obvious to a person of ordinary skill in the art.

The present invention as shown on Fig. 1 can be implemented on any communication device that has hardware components that can perform wireless and wired communication, such as (but not limited to) - multi-purpose pocket computers, personal multimedia devices, etc.

The various devices on which the applications that implement the present invention run may use one or more processors with different instruction-sets, architectures, clock-speeds, etc. and memory that may include high speed random access memory, and may include non-volatile memory, such as one or more magnetic disk storage devices, flash memory devices and other kinds of solid state memory devices.

The various applications that can implement the present invention run on electronic devices that may use at least one physical user interface device that provide the means of control and navigation within the operating system. Applications that run on the devices include (but not limited to ) touch-pads, such as those described in (but not limited to) - (1) U.S. patent application No. Application number: 10/722,948 ("Touch pad for handheld device", filed Nov 25, 2003) ;(2) U.S. patent application No. Application number: 10/188,182 ("Touch pad for handheld device", filed Mar 21, 2006) ;(3) U.S. patent application No: 08/210,610 ("Computer system with touchpad support in operating system", filed March 18, 1994); (4)U.S. patent application No.643,256("Movable touch pad with added functionality", filed 10/643,256), touch screens, such as those described in(but not limited to) (1) U.S. patent application Ser. No. 11/381,313, "Multipoint Touch Surface Controller," filed on May 2, 2006 ;(2) U.S. patent application Ser. No. 10/840,862, "Multipoint Touchscreen," filed on May 6, 2004 ;(3) U.S. patent application Ser. No. 10/903,964, "Gestures For Touch Sensitive Input Devices," filed on Jul. 30, 2004; (4) U.S. patent application Ser. No. 11/048,264, "Gestures For Touch Sensitive Input Devices," filed on Jan. 31, 2005 ; (5) U.S. patent application Ser. No. 11/038,590, "Mode-Based Graphical User Interfaces For Touch Sensitive Input Devices," filed on Jan. 18, 2005 ;(6) U.S. patent application Ser. No. 11/228,758, "Virtual Input Device Placement On A Touch Screen User Interface," filed on Sep. 16, 2005 ;(7) U.S. patent application Ser. No. 11/228,700, "Operation Of A Computer With A Touch Screen Interface," filed on Sep. 16, 2005 ;(8) U.S. patent application Ser. No. 11/228,737, "Activating Virtual Keys Of A Touch-Screen Virtual Keyboard," filed on Sep. 16, 2005 and (9) U.S. patent application Ser. No. 11/367,749, "Multi-Functional Hand-Held Device," filed on Mar. 3, 2006, click wheel such as those described in U.S. patent application Ser. No. 11/549,619 "Method, device, and graphical user interface for dialing with a click wheel" filed on Oct 13, 2006 , keyboards such as those mentioned in(but not limited to) U.S. patent application number 07/711,760 ("Ergonomic keyboard input device" , filed on June 6, 1991), mouse such as those described in (but not limited to) (1)Application number: 09/167,314 ( "Computer mouse with enhance control button (s) ",filed on October 6, 1998 );; (2)Application number: 08/288,945("Roller mouse for implementing scrolling in windows applications ",filed on August 10, 1994) and gesture recognition means such as those described in(but not limited to) (1) European Patent application publication number: EP2482176 A2 ("Multi-input gesture control for a display screen", filed on Nov 4, 2011) and(2) U.S. Patent application with publication number 20120317511 A1 ("DISPLAY WITH BUILT IN 3D SENSING CAPABILITY AND GESTURE CONTROL OF TV", filed on August 21,2012).

Display means used by these devices may use LCD (liquid crystal display) technology, LED (light Emitting Diode) technology, CRT (Cathode ray tube) technology, LPD (light emitting polymer) technology, or any other display technologies. Various realizations of graphics display circuitry that implement a Graphics Processing Unit (GPU) are used to achieve video interface between the user and these electronic devices.

Connectivity of these devices with networks, such as the internet, an intranet and/or wireless network such as cellular telephone network, a wired or wireless local area network (LAN) and/or metropolitan area network (MAN) and/or WAN (wide area network) and other wireless communication is achieved by use of a plurality of communication standards, protocols, and technologies, such as Bluetooth, Wireless Fidelity (Wi-Fi) and/or any other suitable communication protocol, including communication protocols not yet developed as of the filing date of this document.

The present invention maybe implemented on applications that run on a single or variety of operating system platforms, including but not limited to OS X, WINDOWS, UNIX, IOS, ANDROID, SYMBIAN, LINUX, or embedded operating systems, such as VxWorks.

The present invention may also be implemented to work with various web browsers, including but not limited to Internet Explorer, Mozilla Firefox, Safari, and Opera that access and handle various types of web pages constructed with various mark- up languages, such as HTML, HTML-5, XHTML, XML, etc. and the associated CSS (cascading style sheet) files and java-script files.
A route planning system and methodology is provided that efficiently computes optimal routes between locations whilst taking into account real-time traffic data. In an embodiment, an initial graph search is carried out using graph costs that are based on real-time traffic data. The initial graph search is stopped when the search is beyond an initial part within. Real-time traffic data is considered relevant. Pre-computed data that is based on traffic prediction data is then used to calculate the shortest paths to the destination node from each of the nodes at which the initial graph search was stopped. The best of these paths is selected as the optimal route.

The initial graph search is stopped based on a preset condition, which is set based on the observation that real-time traffic data is only good to use for some time (e.g: 30 minutes in the future). Pre-computed data based on traffic prediction data available at pre-computation time is then used for the later part of the route.

Thus, the invention is a computer-implemented route planning method that includes determining source and destination nodes in a graph data structure based on a route planning query, wherein the graph data structure represents a road network, identifying a plurality of locations on the road network for refilling or recharging of a vehicle, executing an initial graph search on the graph data structure using graph costs based on real-time traffic data, wherein the initial graph search starts at the source node and settles nodes until it stops, computing one or more routes to the destination node from one or more of said settled nodes using pre-computed data based on traffic prediction data, and thereby determining a route from the source node to the destination node via one of said settled nodes.

In one embodiment, the present invention can be a system that is comprised of one or more communication modules for communication with one or more client devices, a pre-computation module that is configured to generate a graph data structure based on map data, wherein the graph data structure represents a road network, and a query processing module that is configured to determine source and destination nodes in the graph data structure based on a route planning query. The query-processing module is comprised of:
a first graph search module that is configured to execute an initial graph search on the graph data structure using graph costs based on real-time traffic data, wherein the initial graph search starts at the source node and settles nodes until it stops, and a second graph search module that is configured to compute one or more routes to the destination node from one or more of said settled nodes using pre-computed data based on traffic prediction data. These determine a route from the source node to the destination node via one of said settled nodes.

In yet another preferred embodiment, the invention is a machine-readable medium that is encoded with instructions that, when executed by a processor, cause the processor to carry out a process for generating human-centric driving directions. The process includes generating a route in response to a user request for travel directions, the request specifying at least a target destination, identifying distinctive waypoints along the route, wherein the waypoints are physical structures along the route and are in addition to road names and road topology and each waypoint is associated with a distinctiveness score, wherein the distinctiveness score of each waypoint is based at least in part on a visual prominence of the respective waypoint and based at least in part on an advertising fee per use for incorporating the respective waypoint in travel directions, and incorporating one or more of the waypoints into travel directions responsive to the associated distinctiveness score.

Furthermore, the computer-implemented route planning method has a blending phase between the real-time traffic data and the traffic prediction data. It estimates the refilling or recharging time of a vehicle while planning a route.

Although specific embodiments have been illustrated and described herein, it will be appreciated by those of ordinary skill in the art that any arrangement that is calculated to achieve the same purpose may be substituted for the specific embodiment shown. This application is intended to cover any adaptations or variations of the present invention.

Although the invention has been explained in relation to its preferred embodiment, it is to be understood that many other possible modifications and variations can be made without departing from the spirit and scope of the invention.

## Claims

1. A computer-implemented route planning method for electronic cars, comprising:
determining source and destination nodes in a graph data structure based on a route planning query, wherein said graph data structure represents a road network;
identifying a plurality of locations on the road network for refilling or recharging of a vehicle;
executing an initial graph search on said graph data structure using graph costs based on real-time traffic data, wherein the initial graph search starts at the source node and settles nodes until it stops; and
computing one or more routes to the destination node from one or more of said settled nodes using precomputed data based on traffic prediction data, thereby to determine a route from the source node to the destination node via one of said settled nodes.

2. A computer-implemented route planning method as claimed in claim 1, wherein there is a blending phase between the real-time traffic data and the traffic prediction data.

3. A computer-implemented route planning method as claimed in claim 1 further comprises of estimating the refilling or recharging time of a vehicle.

4. A system, comprising:
one or more communication modules for communication with one or more client devices,
a precomputation module configured to generate a graph data structure based on map data, wherein said graph data structure represents a road network;
a query processing module configured to determine source and destination nodes in said graph data structure based on a route planning query, wherein, the query processing module comprises:
a first graph search module configured to execute an initial graph search on said graph data structure using graph costs based on real-time traffic data, wherein said initial graph search starts at the source node and settles nodes until it stops; and
a second graph search module configured to compute one or more routes to the destination node from one or more of said settled nodes using precomputed data based on traffic prediction data, thereby to determine a route from the source node to the destination node via one of said settled nodes.

5. A machine-readable medium encoded with instructions, that when executed by a processor, cause the processor to carry out a process for generating human-centric driving directions, the process comprising:
generating a route in response to a user request for travel directions, the request specifying at least a target destination;
identifying distinctive waypoints along the route, wherein said waypoints are physical structures along the route and are in addition to road names and road topology and each said waypoint is associated with a distinctiveness score, wherein the distinctiveness score of each said waypoint is based at least in part on a visual prominence of the respective waypoint and based at least in part on an advertising fee per use for incorporating the respective waypoint in travel directions; and
incorporating one or more of said waypoints into travel directions responsive to the associated distinctiveness score.
